# EUROPEAN PATENT SPECIFICATION

(11) **EP 0 580 858 B1**
(45) Date of publication and mention of the grant of the patent: **28.05.1997**
(21) Application number: 92905005.2
(22) Date of filing: 17.02.1992
(51) Int. Cl.: G01M 11/00

(54) **METHOD OF MEASURING THE AMOUNT OF LIGHT REFLECTED BY AN OPTICAL FIBER AND DEVICE THEREFOR**
VERFAHREN UND GERÄT ZUR MESSUNG DER DURCH EINE OPTISCHE FASER REFLEKTIERTEN LICHTMENGE
PROCEDE ET DISPOSITIF POUR MESURER LA QUANTITE DE LUMIERE REFLECHIE PAR UNE FIBRE OPTIQUE

(43) Date of publication of application: 02.02.1994
(73) Proprietor: SUMITOMO OSAKA CEMENT CO., LTD., Chiyoda-ku Tokyo 101 (JP)
(72) Inventor: NISHIGAYA, Kazushi, Ichikawa-shi, Chiba 272 (JP); ITOU, Tomoyuki, Tokyo 156 (JP)
(74) Representative: Tiedtke, Harro, Dipl.-Ing.
(86) International application number: JP9200155
(87) International publication number: WO9316364

(56) References cited:
- JP-U-62 022 530
- PATENT ABSTRACTS OF JAPAN vol. 6, no. 217 (P-152)(1095) 30 October 1982 & JP-A-57 120 835 (NIPPON DENSHIN DENWA KOSHA)
- PATENT ABSTRACTS OF JAPAN vol. 10, no. 223 (P-483)(2279) 5 August 1986 & JP-A-61 059 237 (NIPPON TELEGR. & TELEPH CORP)
- PATENT ABSTRACTS OF JAPAN vol. 11, no. 311 (P-625)(2758) 12 October 1987 & JP-A-62 102 131 (YOKOGAWA ELECTRIC CORP)

## Description

### FIELD OF ART

The present invention relates to an accurate measuring method the amount of back reflection from an optical fiber element by using a directional coupler made from birefractive crystal, with improved measurement limits, and a device to be used therefor.

### BACKGROUND OF THE ART

An accurate measurement of the amount of light reflected by a long distance end face of an optical fiber after transmitting through an optical fiber device is a necessary basic technique or essential technology, where an optical fiber is used in an optical fiber communication, optical measurement, and an optical disc memory.

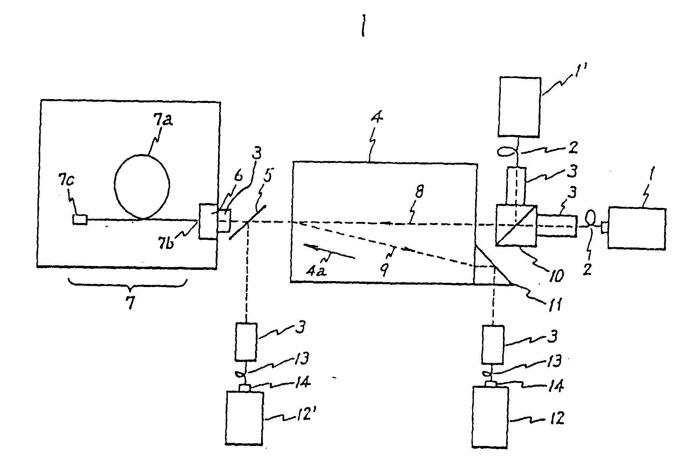

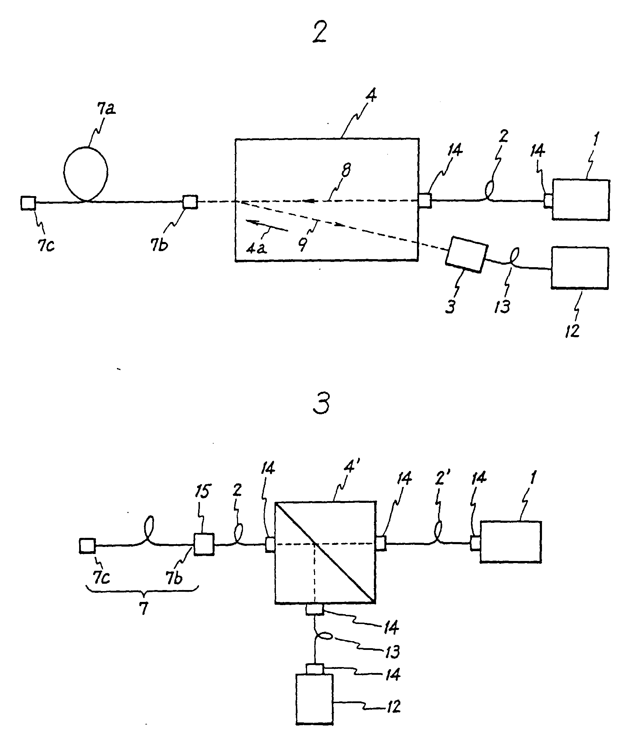

FIG. 3 shows a prior art measurement device for measuring the amount of light reflected from an optical fiber element. (See JIS handbook "Optics" edited by Nippon Kikaku Kyokai; Japanese Institute of Standard, published by Goro Mori.) This describes a measurement and test of performance of an optical fiber element provided with a connector, an isolater, a switch and the like when a laser beam is incident thereto, to check the amount of reflected light.

In the Figure, there are provided an LD source 1, a directional coupler 4', an optical fiber 2 and an optical fiber element 7 to be tested, a power meter 12. A light for measurement is emitted from a source 1, and is transmitted through a directional coupler 4', a fiber 2, and enters an optical fiber element 7 to be measured, and reflected at a remote end face 7c of the fiber element 7. The reflected light is a reversed phase, and it's polarization angle is rotated, and then, the reflected light is partially reflected by a half-mirror, and enters a photo detector 12, in which the return light can be measured.

A reflection properties of the end face to be measured are shown as a relative value to compare with those of the total reflecting mirror end face of the fiber element. In general, a directional coupler 4' is an optical fiber coupler. However, in the prior art, the reflection at the incident end 7b of the fiber element to be tested will give some limitation of the measurement, if the reflection from the end face 7c is less than that from the incident end face 7b, it will be impossible to measure the amount of the back reflection from the end face 7c of the fiber element. Even when the connector having minimum reflection is used, the limit of the measurement is usually about 40 dB.

In the prior art measurement, the light reflected by the incident end 7b of the fiber element to be tested will mask a wanted reflection, which gives limitation of the measurement. Therefore, if the reflection from the end face 7c of the fiber element to be tested is lower than that from the incident end face 7b, the measurement becomes impossible.

Patent Abstracts of Japan, vol.6, no.217 (P-152) (1095) Oct'82 corresponding to JP-A-57 120 835, as nearest prior art, discloses an apparatus for measuring back scatter from a fibre including back scatter from its remote end face, which comprises the basic features of a light source, a polarizing directional coupler which functions as a polarizing beam splitter to direct light from the source into the fibre, and implicit means for twisting the fibre into a coil at a set angular speed. By continuous application of twist to the coil a continuously varying stress is imparted thereto so as to induce birefringence and a concomittant polarization change allowing subsequent separation of different, varying polarization components by the coupler, which are measured and averaged.

Further relevant prior art is disclosed in Patent Abstracts of Japan, vol.10, no.223 (P-483)(2279), Aug'86 corresponding to JP-A-61 059 237; and Patent Abstracts of Japan, vol.11, no.311 (P-625)(2758) Oct'87 corresponding to JP-A-62 102 131.

### DISCLOSURE OF INVENTION

The inventors propose a method of measuring definitely and accurately the amount of the light reflected from the fiber element, with improved limitation of measurement, by using a polarization properties of birefringent crystal and of the fiber.

In order to solve the above-mentioned problems, the inventors propose a method for measuring the amount of the back reflection from an optical fiber element and a measurement device specifically designed for carrying out this method as defined in claims 1 and 2 respectively. The method comprises leading a light source to a directional coupler, feeding an output light therefrom into a fiber element to be tested, and separating selectively only a return light from a remote end face of the fiber element by the directional coupler.

A birefringent crystal used for a directional coupler functions as a polarizing beam splitter, while the optical fiber element is coiled to work as a quarter waveplate by an appropriate choice of the number of turns and the coil diameter, because the coiling force generates the stress to give birefringency in fiber core. When a linearly polarized light from the bidirectional coupler is reflected back from the incident end face 7b, the reflected light returns to the light source direction and never comes to the optical sensor. On the other hand the back reflection from the other end face of the test fiber or from the under test device is orthogonally polarized against the incident polarization after transmitted in the coiled fiber. This signal light goes back in a different directon due to the birefringency of the bidirectional coupler then finally reaches to the optical sensor.(See FiG.1) As a result, the small signal light can be measured separately from the direct reflection from the incedent end face.

Further, the birefringent crystal can be used as a directional coupler for the measurement of the light reflected by the remote end face of the fiber element to be tested.

### SIMPLE DESCRIPTION OF DRAWINGS

FIG. 1 shows schematically a measurement device to used for a method of measurement of the amount of back reflection from an end face of an optical fiber element in accordance with the present invention.

FIG. 2 illustrates schematically a principle of the measurement of the amount of back reflection from the end face of an optical fiber element in accordance with the present invention.

FIG. 3 shows schematically a prior art measurement of the amount of light reflected from the end face of an optical fiber device.

### BEST MODE FOR CARRYING OUT THE INVENTION

FIG. 2 shows schematically a principle of the measurement of the amount of back reflection from the end face of an optical fiber element in accordance with the present invention. There are provided a measurement light source 1, a birefringent crystal 4, an optical fiber element 7 for measurement, and a collimator 3, and a power meter 12 for light.
The fiber is mounted on a tool so as to impart a constant stress at least on a portion of the fiber element to be tested, as shown by 7a, to constitute a wavelength plate of a fiber type.

The portion of the fiber 7 itself is deformed in form of e.g. loop, so as to impart some stress therein, such that the plane of polarization of the laser beam transmitting therethrough is rotated.

Birefringent crystal 4 is used to act two functions of increasing an extinction coefficient of a polarization light fed to the fiber element to be tested, and separating a return light reflected by a reflection end face 7c of the fiber element to be tested. A wavelength plate 7a of a fiber type can rotate a plane of linear polarization of the beam 9 reflected by the end face 7c of the fiber to be tested, into an appropriate angle, e.g. 90° with respect to the plane of linear polarization of the incident beam 8.

In a birefringent crystal 4, the light beam 8 incident to the fiber element to be tested is an ordinary ray light, and the light 9 reflected by the end face of the fiber element to be tested is made to be an extraordinary ray light, and therefore, the adjustment of an optical axis 4a of a calcite crystal 4 can enable to separate completely a light reflected by the end face 7c of the fiber element to be tested from a light from an incident face 7b.

The reflection properties of the end face 7c of the fiber is represented by a relative value comparing with the reflection of the completely reflecting mirror provided at the end face of the fiber, as a basis value for the measurement.

The principle of the inventive measurement is based on the finding that the reflection from the incident end face 7b can be removed, and then, the reflection amount below e.g. 60 dB can be measured in accordance with the present invention.

The inventive measurement can be applied to the measurement of the reflective index of the fiber.

The present invention is further illustrated by the following example, but should not be interpreted for the limitation of the invention.

### EXAMPLE

FIG. 1 shows a main portion of a typical device to carry out the method of measurement of the amount of back reflection from an end face of an optical fiber element in accordance with the present invention in a schematic perspective view.

In the Figure, there are provided a light souce; laser diode 1, a polarization maintainig fiber 2, a collimator 3, a directional coupler 4 made from a birefringent crystal, an optical axis 4a of the calcite crystal 4, and a half-mirror 5 for a monitor of incident beam light.

A V-shaped section groove 6 should be provided to mount definitely the optical fiber element 7 to be measured, at a position of input terminal (output terminal) of the optical fiber element to be measured. The loop shape 7a of the fiber can function as a fiber-type wavelength plate, and the light to be measured is reflected by end face 7c, and the light beam 8 to be measured is transmitted from a source 1, through a beam splitter 10, a calcite crystal 4 and a half-mirror 5, and is incident on a fiber element 7, and is reflected by the other end 7c of the fiber element 7, and the reflected beam 9 comes back.

A beam splitter 10 is provided for exchange of a source 1 to a source 1'. The reflected beam 9 is refracted birefringently by the calcite crystal 4, and is incident on a prism 11 mounted on the end face of the calcite crystal 4, and transmitted through a collimator 3, a transmitter optical fiber 13, an optical connector 14, and goes to an optical power meter 12, wherein the amount of light is measured.

A laser beam 8 emitted from a laser diode 1 is transmitted to a polarization maintaining fiber 2, and collimated by a collimator 3 to form a parallel ray, which comes into a directional coupler 4 (calcite crystal). The adjustment of polarizer wave face will make the light an ordinary ray in respect to the calcite crystal.

The beam 8 coming out of a calcite crystal 4 is partly separated at a half-mirror 5, and the part of the beam is transmitted through a collimator 3, coming incident to the fiber 13, and monitored by a power mater 12'.

The light 8 transmitted through a half-mirror 5 is gathered by a collimator 3, and is incident on the fiber 7 to be tested. The V-shaped section groove 6 which defines the position of the fiber can fix constantly the position of the fiber element 7 with good reproductivity.

The number of the loops and the diameter of the loops are made such that the loops 7a of the fiber 7 will constitute a property of a quarter wavelength plate. Therefore, the incident light 8 passes twice the loop portion 7a ( a wavelength plate of an optical fiber type ) of the fiber element 7 as it goes to and returns from the reflection end to be tested. Therefore, the loop portion of the fiber will give the effect of a half-wavelength plate to the light.

When the fiber element 7 is at least portionally made in loop form, the loop portion can be made adjustably rotated. Therefore, the polarization direction of the incident beam and the main axis of the wavelength plate can be adjusted, so that a linear polarized light having the plane of polarization at the angle of 90° apart from that of the incident light can be easily obtained.

The back reflection from the end face 7c of the fiber element comes again into the directional coupler 4 (calcite crystal), and the light transmits as an extraordinary ray through a passage, and is converged by a collimator 3, and comes into an optical power meter 12 through a transmission fiber 13.

The reflection properties of the end face 7c to be tested can be compared with those of the complete reflection mirror of the end face of an optical fiber element, and the ratio of the real reflection of the end face to the complete reflection is measured and shown.

The amount of back reflection from the end face can be selectively measured by using our method of measuring the amount of the back reflection from the optical fiber element to be tested. This will significantly improve the limit of the measurement.

In our measurement apparatus for measuring the amount of the back reflection from the optical fiber element, there are provided a source 1, a collimator 3, a directional coupler 4 made from a calcite crystal, an optical axis 4a of the calcite crystal, an optical fiber element 7 to be tested, a portion of the fiber element 7a of functioning as a wavelength plate of an optical fiber type (loop portion), an incident end 7b of the fiber element to be tested, a reflection end 7c of the fiber element to be tested, a light beam 8 for use in measurement, a return beam 9 reflected by the reflection end, a beam splitter 10, an optical power meter 12 and an optical connector 14.

### INDUSTRIAL UTILIZATION

The inventive method of measurement of the amount of light reflected by the optical fiber device can provide the following utilization.

Firstly, the light reflected by the incident end face of an optical fiber can be completely removed from the back reflection from the other end face of the optical fiber, to be measured, and the back reflection to be measured can be selectively separated for accurate measurement.

Secondly, the back reflection to be measured at level of less than 60 dB can be measured, rather than 40 dB of the prior art limit of measurement, and then the limit for measurement can be significantly improved.

Thirdly, it can enable to improve the performance of an optical fiber device.

## Claims

1. A method of measuring the amount of back reflection from a remote end face (7c) of an optical fiber element (7),
by guiding the beam from a beam source (1) to a directional coupler (4), so as to permit the output thereof to be incident upon the fiber to be measured, wherein a part of the optical fiber element (7) to be measured is deformed like a coil to induce constant stress and birefringence in the fiber element (7) such that the coiled portion of the fiber element (7) acts as a quarter wave plate for beam transmitted therethrough, thereby adjusting the angle of polarization of the light reflected by said remote end face (7c);
selectively separating the beam reflected back by the remote end face (7c) to be measured from the light beam reflected back at the incident end face (7b) of the optical fiber element (7) by propagating said back reflected light beam through said directional coupler (4) comprising a birefringent crystal (4) functioning as polarizing beam splitter; and
measuring of said light reflected by the remote end face (7c).

2. A measurement device for carrying out a method of measuring the amount of the light beam reflected from a remote end face (7c) of an optical fiber element (7), as claimed in claim 1,
the device comprising
a light source (1) ;
a detector (12) for detecting the light reflected from the remote end back face (7c) of the fiber element (7);
a directional coupler (4) for selectively separating the beam reflected by the remote end face (7c) to be measured from the light beam reflected at the incident end face (7b) of the optical fiber element (7) by propagating said back reflected light beam through the directional coupler to exhibit the function of polarizing beam splitter; said directional coupler (4) comprising a birefringent crystal functioning as polarizing beam splitter and
means for deforming at least a part of the optical fiber element (7) into a coil to induce constant stress and birefringence therein, such that the coiled part of the fiber element (7) acts as a quarter wave plate for light transmitted therethrough, thereby adjusting the angel of polarization of the light reflected by said remote end face (7c).

## Patentansprüche

1. Verfahren zur Messung der Menge an Rückreflexion von einer entfernten Endfläche (7c) eines optischen Faserelements (7),
indem der Strahl von einer Strahlquelle (1) an einen Richtungskoppler (4) geführt wird, so daß sein Austritt ermöglicht wird, um auch die zu messende Faser zu treffen, wobei ein Teil des zu messenden optischen Faserelements (7) wie eine Spule verformt wird, um eine konstante Belastung und eine Doppelbrechung im Faserelement (7) derart zu induzieren, daß der gewundene Abschnitt des Faserelements (7) als eine Viertelwellenplatte auf den durch ihn übertragenen Strahl wirkt, wodurch der Polarisationswinkel des durch die entfernte Endfläche (7c) reflektierten Lichts eingestellt wird;
der zu messende durch die entfernte Endfläche (7c) zurückreflektierte Strahl wird selektiv vom an der einfallenden Endfläche (7b) des optischen Faserelements (7) zurückreflektierten Lichtstrahl durch Ausbreiten des zurück reflektierten Lichtstrahls durch den Richtungskoppler (4) getrennt, der ein doppelbrechendes Kristall (4) umfaßt, das als polarisierender Strahlteiler dient; und
Messen des durch die entfernte Endfläche (7c) reflektierten Lichts.

2. Messvorrichtung zum Ausführen eines Verfahrens zum Messen der Lichtstrahlmenge, die an einer entfernt liegenden Endfläche (7c) eines optischen Faserelements (7) reflektiert wird, gemäß Anspruch 1,
wobei die Vorrichtung umfaßt:
eine Lichtquelle (1);
einen Detektor (12) zum Erfassen des an der entfernten hinteren Endfläche (7c) des Faserelements (7) reflektierten Lichts;
einen Richtungskoppler (4) zum selektiven Trennen des durch die zu messende entfernte Endfläche (7c) reflektierten Strahls gegenüber dem an der einfallenden Endfläche (7b) des optischen Faserelements (7) reflektierten Lichtstrahls durch Ausbreiten des zurückreflektierten Lichtstrahls durch den Richtungskoppler, so daß die Funktion der Strahlteilung durch Polarisierung dargestellt wird;
wobei der Richtungskoppler (4) ein doppelbrechendes Kristall umfaßt, das als ein Polarisierungsstrahlteiler fungiert;
eine Einrichtung zum Verformen zumindest eines Teils des optischen Faserelements (7) in eine Spule, um darin eine konstante Belastung und Doppelbrechung derart zu induzieren, daß der gewundene Teil des Faserelements (7) als eine Viertelwellenplatte auf das durch sie übertragene Licht wirkt, wodurch der Winkel der Polarisation des durch die entfernte Endfläche (7c) reflektierten Lichts eingestellt wird.

## Revendications

1. Un procédé de mesure de la quantité de réflexion en sens contraire venant d'une face d'extrémité distale (7c) d'un élément en fibre optique (7),
en guidant le faisceau venant d'une source de faisceau (1) vers un coupleur directionnel (4), de manière à permettre que sa sortie soit incidente sur la fibre à mesurer, dans lequel
une partie de l'élément en fibre optique (7) à mesurer est déformée en une spirale afin d'induire une contrainte et une biréfringence constantes dans l'élément en fibre (7), de manière que la partie en spirale de l'élément en fibre (7) agisse comme une plaque quart d'onde pour le faisceau transmis à travers elle, de manière à ajuster l'angle de polarisation de la lumière réfléchie par ladite face d'extrémité distale (7c);
en séparant sélectivement le faisceau réfléchi en sens contraire par la face d'extrémité distale (7c) à mesurer venant du faisceau de lumière réfléchi en sens contraire au niveau de la face d'extrémité incidente (7b) de l'élément en fibre optique (7), en propageant ledit faisceau de lumière réfléchi en sens contraire au travers dudit coupleur directionnel (4), comprenant un cristal birefrigerant (4) fonctionnant comme séparateur de faisceau par polarisation ; et
en mesurant ladite lumière réfléchie par la face d'extrémité distale (7c).

2. Un dispositif de mesure prévu pour mettre en oeuvre un procédé de mesure de la quantité de faisceau de lumière réfléchi venant de la face d'extrémité distale (7c) d'un élément en fibre optique (7), selon la revendication 1,
le dispositif comprenant
une source de lumière (1);
un détecteur (12) prévu pour détecter le faisceau de lumière réfléchi venant de la face d'extrémité distale (7c) de l'élément en fibre (7);
un coupleur directionnel (4) prévu pour séparer sélectivement le faisceau réfléchi par la face d'extrémité distale (7c) à mesurer venant du faisceau de lumière réfléchi au niveau de la face d'extrémité incidente (7b) de l'élément en fibre optique (7), en propageant ledit faisceau de lumière réfléchi en sens contraire au travers du coupleur directionnel, afin de déployer la fonction de séparateur de faisceau par polarisation, ledit coupleur directionnel (4) comprenant un cristal biréfrigerant fonctionnant comme un séparateur de faisceau par polarisation; et
des moyens prévus pour déformer au moins une partie de l'élément en fibre optique (7) jusqu'à avoir une spirale afin d'induire une contrainte et une biréfringence constantes en son sein, de manière que la partie en spirale de l'élément en fibre (7) agisse comme plaque de quart d'onde pour la lumière transmise à travers elle, de manière à ajuster l'angle de polarisation de la lumière réfléchie par ladite face d'extrémité distale (7c).
